(19) Europäisches Patentamt
European Patent Office
Office européen des brevets

(11) **EP 3 930 065 B1**

(12) **EUROPEAN PATENT SPECIFICATION**

(45) Date of publication and mention
of the grant of the patent:
**12.07.2023  Bulletin 2023/28**

(21) Application number: **20850310.2**

(22) Date of filing: **04.08.2020**

(51) International Patent Classification (IPC):
*H01M 10/0525 (2010.01)*    *H01M 4/133 (2010.01)*
*H01M 4/134 (2010.01)*    *H01M 50/417 (2021.01)*
*H01M 50/434 (2021.01)*    *H01M 50/443 (2021.01)*
*H01M 50/451 (2021.01)*    *H01M 50/457 (2021.01)*
*H01M 4/36 (2006.01)*    *H01M 4/38 (2006.01)*
*H01M 4/587 (2010.01)*    *H01M 10/613 (2014.01)*
*H01M 10/654 (2014.01)*    *H01M 10/6562 (2014.01)*

(52) Cooperative Patent Classification (CPC):
**H01M 4/133; H01M 4/134; H01M 10/0525;
H01M 50/417; H01M 50/434; H01M 50/443;
H01M 50/451; H01M 50/457;** H01M 4/366;
H01M 4/386; H01M 4/587; H01M 10/613;
H01M 10/654; H01M 10/6562; H01M 2004/027;

(Cont.)

(86) International application number:
**PCT/CN2020/106916**

(87) International publication number:
**WO 2021/023196 (11.02.2021 Gazette 2021/06)**

(54) **LITHIUM ION BATTERY AND DEVICE**

LITHIUMIONENBATTERIE UND VORRICHTUNG

BATTERIE LITHIUM-ION ET DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **05.08.2019   CN 201910715799**

(43) Date of publication of application:
**29.12.2021   Bulletin 2021/52**

(73) Proprietor: **Contemporary Amperex Technology
Co., Limited
Fujian 352100 (CN)**

(72) Inventors:
• **CHEN, Shitong
Ningde, Fujian 352100 (CN)**
• **GONG, Zhijie
Ningde, Fujian 352100 (CN)**
• **XIE, Bin
Ningde, Fujian 352100 (CN)**
• **MA, Lin
Ningde, Fujian 352100 (CN)**

(74) Representative: **Gerauer, Marc Philippé et al
Kraus & Weisert
Patentanwälte PartGmbB
Thomas-Wimmer-Ring 15
80539 München (DE)**

(56) References cited:
WO-A1-2019/089897    WO-A1-2019/107229
CN-A- 103 401 016    CN-A- 104 752 752
CN-A- 105 742 613    CN-A- 105 742 613
CN-A- 106 684 291    CN-A- 108 878 775
CN-A- 109 546 150    JP-A- 2013 510 405

(52) Cooperative Patent Classification (CPC): (Cont.)
    H01M 2220/20; Y02E 60/10; Y02P 70/50

## Description

### TECHNICAL FIELD

This application relates to the field of batteries, and in particular, to a lithium-ion battery and a device.

### BACKGROUND

With the ubiquity of new energy vehicles, the demand for lithium-ion power batteries is proliferating. A battery is required to have features such as fast charging, a high energy density, a long cycle life, and high stability concurrently.

A lithium pre-supplementing technology not only makes up for loss of first-cycle coulombic efficiency of a negative electrode, but also provides an additional lithium source, thereby helping to enhance the energy density and cycle performance of the lithium-ion battery. However, a surface of an electrode plate supplemented with lithium is a smooth lithium foil. Consequently, relative slippage is likely to occur between a lithium-supplementing layer of the electrode plate and a separator, thereby affecting the stability of the battery.

In addition, during cycles of a high-energy-density battery, the electrode plate is prone to expand, and is likely to snap off. Even a fractured section of the electrode plate may directly pierce the separator, thereby leading to safety risks of thermal runaway of a battery cell. Currently, a main measure taken to solve the problem of electrode plate expansion is to increase strength of a current collector. However, the sheer increase the strength of the current collector leads to a poor elongation of the current collector, and the problem of electrode plate expansion is not properly solved.

CN 105 742 613 A discloses a negative pole piece, which comprises a negative pole current collector and a negative pole film layer, wherein the negative pole film layer is arranged on the negative pole current collector and comprises at least two negative pole active material layers; and the at least two negative pole active material layers are sequentially arranged on the negative pole current collector from the inside to the outside according to the lithium-ion dynamic property decreasing order of the negative pole active material layers.

WO 2019/107229 A1 discloses a binder composition for a non-aqueous secondary cell with which it is possible to form a slurry composition for a non-aqueous secondary cell functional layer and a functional layer for a non-aqueous secondary cell.

### SUMMARY

In view of the problems in the background technologies, an objective of this application is to provide a lithium-ion battery to enhance stability, safety and cycle performance of the lithium-ion battery.

To achieve the foregoing objective, an aspect of this application provides a lithium-ion battery, including a positive electrode plate, a negative electrode plate, a separator located between the positive electrode plate and the negative electrode plate, and an electrolytic solution. A lithium-supplementing layer with a smooth surface and a first functional coating are sequentially disposed on a surface of the negative electrode plate, the surface being close to the separator. A second functional coating is disposed on a surface of the separator, the surface being close to the negative electrode plate. Further, an inorganic coating is disposed between the separator and the second functional coating, the inorganic coating comprises an inorganic particulate material, and the inorganic particulate material is one or more selected from aluminum oxide, silicon monoxide, silicon dioxide, zirconium dioxide, manganese oxide, magnesium oxide, calcium oxide, and calcium carbonate. Both the first functional coating and the second functional coating contain an organic porous particulate material. A compressibility S of the organic porous particulate material ranges from 40% to 90%, and optionally, 50% to 80%.

The following relational expression is satisfied: $S = (H - h)/H$, where H represents an original particle height of the organic porous particulate material, and h represents a particle height of the organic porous particulate material that has been pressed for 1 minute under a pressure of 2 Mpa. The inorganic coating is 0.5 $\mu$m to 10 $\mu$m in thickness, and the first functional coating and the second functional coating are each 5 $\mu$m to 70 $\mu$m in thickness. The organic porous particulate material is one or more selected from polyacrylate, polypropylene, polyethylene, polyamide, polyborate, polysulfone, polyarylate, polyvinylpyridine, and polyaniline.

Another aspect of this application further provides a device. A drive source or a storage source of the device is the lithium-ion battery described above.

Compared with the prior art, this application achieves at least the following beneficial effects:

1. Both the first functional coating and the second functional coating contain the organic porous particulate material, and the organic porous particulate material in the first functional coating and the organic porous particulate material in the second functional coating can achieve an effect of mechanical riveting on a contact surface, thereby increasing an interaction force between the lithium-supplementing electrode plate and the separator. The increased interaction force can suppress the relative slippage between the lithium-supplementing layer and the separator due to a smooth surface of the lithium-supplementing layer after the negative electrode plate is supplemented with lithium, thereby enhancing the stability of the lithium-ion battery.

2. The organic porous particulate material contained in the first functional coating and the second functional coating can increase a reserved gap between the lithium-supplementing layer of the electrode plate and the separator (especially at a corner). On the one hand, this mitigates safety risks of electrode plate fracturing or even separator piercing caused by expansion of the electrode plate. On the other hand, this ensures air circulation at the corner, facilitates heat dissipation, and prevents a corner of a rolled battery cell supplemented with lithium from being blackened by poor air circulation, thereby increasing a lithium utilization rate of the lithium-supplementing battery and ultimately improving battery performance. Still on another hand, this can also enhance a capacity of accommodating lithium scraps/lithium specks on a surface of the lithium-supplementing layer of the electrode plate because the compressible coating reduces a probability of piercing the separator by the lithium scraps/lithium specks. After the electrolytic solution is injected, the lithium-supplementing layer is inserted into an active material layer, and bumps on the surface of the lithium-supplementing layer disappear, thereby improving battery safety.

3. The organic porous particulate material contained in the first functional coating and the second functional coating can absorb the electrolytic solution, and improve an infiltration effect of the lithium-supplementing layer of the electrode plate, so that the lithium-supplementing layer can be inserted into the active material layer more effectively. In addition, this also increases a utilization rate of the lithium-supplementing layer and improves battery performance. Moreover, the electrolytic solution can be stored in the organic porous particulate material to suppress a problem of insufficient electrolytic solution at an interface between the electrode plate and the separator in later cycles of the battery, and improve cycle performance of the battery.

4. The device according to this application includes the lithium-ion battery provided in this application, and therefore, has at least the advantages identical to those of the lithium-ion battery according to this application.

## BRIEF DESCRIPTION OF DRAWINGS

To describe the technical solutions in the embodiments of this application more clearly, the following outlines the drawings used in the embodiments of this application. Apparently, the drawings outlined below are merely a part of embodiments of this application. A person of ordinary skill in the art may derive other drawings from the outlined drawings without making any creative efforts.

FIG. 1 is a schematic diagram of a lithium-ion battery according to an embodiment;
FIG. 2 is an exploded view of FIG. 1;
FIG. 3 is a schematic diagram of a battery module according to an embodiment;
FIG. 4 is a schematic diagram of a battery pack according to an embodiment;
FIG. 5 is an exploded view of FIG. 4; and
FIG. 6 is a schematic diagram of a device using a lithium-ion battery as a power supply

according to an embodiment.

Reference numerals:

1- Battery pack;
2- Upper box;
3- Lower box;
4- Battery module;
5- Lithium-ion battery;
51- Housing body;
52- Battery cell; and
53- Cover plate.

## DETAILED DESCRIPTION OF EMBODIMENTS

To make the objectives, technical solutions, and advantages of the embodiments of this application clearer, the following gives a clear and comprehensive description of the technical solutions in the embodiments of this application. Apparently, the described embodiments are merely a part of but not all of the embodiments of this application. All other embodiments derived by a person of ordinary skill in the art based on the embodiments of this application without making any creative efforts shall fall within the protection scope of this application.

The following describes in detail a lithium-ion battery according to this application. A lithium-ion battery provided in an embodiment of this application includes a positive electrode plate, a negative electrode plate, a separator located between the positive electrode plate and the negative electrode plate, and an electrolytic solution. A lithium-supplementing layer with a smooth surface and a first functional coating are sequentially disposed on a surface of the negative electrode plate, the surface being close to the separator. A second functional coating is disposed on a surface of the separator, the surface being close to the negative electrode plate. Further, an inorganic coating is disposed between the separator and the second functional coating, the inorganic coating comprises an inorganic particulate material, and the inorganic particulate material is one or more selected from aluminum oxide, silicon monoxide, silicon dioxide, zirconium dioxide, manganese oxide, magnesium oxide, calcium oxide, and calcium carbonate. Both the first functional coating and the second functional coating contain an organic porous particulate material. The compressibility S of the organic porous particulate material satisfies:

S = (H - h)/H, where S ranges from 40% to 90%, and optionally, 50% to 80%.

H represents an original particle height of the organic porous particulate material, and h represents a particle height of the organic porous particulate material that has been pressed for 1 minute under a pressure of 2 Mpa. The inorganic coating is 0.5 $\mu$m to 10 $\mu$m in thickness, and the first functional coating and the second functional coating are each 5 $\mu$m to 70 $\mu$m in thickness. The organic porous particulate material is one or more selected from polyacrylate, polypropylene, polyethylene, polyamide, polyborate, polysulfone, polyarylate, polyvinylpyridine, and polyaniline.

In the lithium-ion battery according to this embodiment of this application, the organic porous particulate material in the first functional coating and the organic porous particulate material in the second functional coating can achieve an effect of mechanical riveting on a contact interface, thereby increasing an interaction force between the lithium-supplementing layer of the electrode plate and the separator, suppressing the relative slippage between the lithium-supplementing layer and the separator due to a smooth surface of the lithium-supplementing layer after the negative electrode plate is supplemented with lithium, and enhancing battery stability.

In addition, the organic porous particulate material contained in the first functional coating and the second functional coating reserves a gap between the lithium-supplementing layer of the electrode plate and the separator (especially at a corner). On the one hand, this effectively mitigates safety risks of electrode plate fracturing or even separator piercing caused by expansion of the electrode plate. On the other hand, this ensures air circulation at the corner, facilitates heat dissipation of the rolled electrode plate supplemented with lithium, and prevents a corner of a rolled battery cell supplemented with lithium from being blackened by poor air circulation, thereby increasing a lithium utilization rate of the lithium-supplementing battery cell and ultimately improving battery performance. Still on another hand, this can also enhance a capacity of accommodating lithium scraps/lithium specks on a surface of the lithium-supplementing layer because the compressible coating reduces a probability of piercing the separator by the lithium scraps/lithium specks. After the electrolytic solution is injected, the lithium-supplementing layer is inserted into an active material layer, and bumps on the surface of the lithium-supplementing layer disappear, thereby improving battery safety.

In addition, the organic porous particulate material contained in the first functional coating and the second functional coating can absorb the electrolytic solution, and improve an infiltration effect of the lithium-supplementing layer of the electrode plate and the separator, so that the lithium-supplementing layer can be inserted into the active material layer more effectively. This also increases a utilization rate of the lithium-supplementing layer, improves effects of the electrolytic solution infiltrating the separator, and ultimately improves battery performance. Moreover, the electrolytic solution can be stored in the organic porous particulate material to suppress a problem of insufficient electrolytic solution at an interface between the electrode plate and the separator in later cycles of the battery, and improve cycle performance of the battery. Further, the organic porous particulate material is one or more selected from polyacrylate, polypropylene, polyethylene, polyamide, polyborate, polysulfone, polyarylate, polyvinylpyridine, and polyaniline.

All the foregoing materials can absorb and store the electrolytic solution and increase an available gap at the corner of the battery cell. Polymer materials with a large molecular weight are less compressible because their molecular structures are mostly long chains, and therefore, can further increase the available gap at the corner of the battery cell. Therefore, a polymer with a weight-average molecular weight of 500-2,000,000 may be selected, and further, an ester or an organic polymer material containing carboxyl or hydroxyl with a weight-average molecular weight of 500-2,000,000 is selected. Such materials increase the available gap at the corner of the battery cell more significantly. A reason is that the ester or the organic polymer materials containing carboxyl or hydroxyl not only increases the gap at the corner of the battery cell significantly, but also dissolves the electrolytic solution more effectively. Such materials can absorb and store a larger amount of the electrolytic solution, improve the infiltration effect of the lithium-supplementing layer of the electrode plate more effectively, and suppress the problem of insufficient electrolytic solution at the interface between the electrode plate and the separator in later cycles of the battery. The ester in this application is one or more selected from polyacrylate, polypropylene carbonate, aromatic copolyester, polyurethane, polyhydroxybutyrate, and poly fatty acid ester. The organic polymer material containing carboxyl or hydroxyl may be one or more selected from acrylic resin (carboxyl), polyacrylic resin, hexahydroxy triphenyl, phenolic hydroxyl structure polymer, polyvinyl alcohol, and the like.

Further, a significant surface functional group of the organic porous particulate material is one or more selected from carboxyl, hydroxyl, ester, alkenyl, and alkyl.

A surface functional group of the organic porous particulate material affects electrochemical performance of the lithium-ion battery. After a lot of experimental research, the inventor finds that surface activity of the organic porous particulate material varies depending on the type of the surface functional group, thereby affecting a speed and an extent of a reaction between the organic porous particulate material and the lithium-supplementing layer of the electrode plate. Functional groups of relatively high reactivity with the lithium-supplementing layer are carboxyl, hydroxyl, and ester consecutively. A chemical reaction between the surface functional group of the organic porous particulate material and the lithium-supplementing layer of the electrode plate helps to improve the interaction between the surface functional group and the lithium-supplementing layer, thereby increasing a bonding effect between the first functional coating and the lithium-supplementing layer of the negative electrode. However, an excessive reaction between a lithium layer and the carboxyl that serves as the surface functional group may lead to a relatively high heat emission temperature of the electrode plate. Therefore, it is necessary to control reaction conditions or perform pretreatment, or select an appropriate organic porous particulate material to achieve a relatively appropriate reactivity of the surface functional group. Secondly, the difference in the surface functional group also affects an electrolyte absorption capacity of the material. In the electrolytic solution, there are many ester polymer materials. Based on the rule of the likes dissolve each other, the ester functional group on the surface of the material effectively improves the electrolyte absorption capacity of the material. Therefore, when the significant surface functional group of the organic porous particulate material is an ester group, the electrochemical performance of the battery is improved significantly. The significant surface functional group mentioned in this application means a functional group of which the content is the highest on the surface. Further, the particle size of the organic porous particulate material is 1 $\mu$m to 70 $\mu$m, and optionally, 5 $\mu$m to 50 $\mu$m.

As the particle size of the organic porous particulate material increases, the material is more capable of absorbing and storing the electrolytic solution, and a molecular chain of the material is larger. Therefore, the compressibility of the material decreases, and the available gap at the corner is larger. When the particle size increases, the gap at the corner also increases. The increased gap reserves enough space for expansion of the electrode plate, but increases a transmission distance of lithium ions at the corner, and is likely to cause lithium-plating black flecks on the interface, increase an internal resistance of the battery cell, and affect battery performance. The increased particle size makes the organic porous particulate material absorb more electrolytic solution. This can effectively increase an electrolyte retention capacity, but may decrease a bonding force between the negative electrode plate and the organic particulate material, affect an interface effect of the battery cell, and ultimately affect the battery performance. With the decrease of the particle size of the organic porous particulate material, distribution of the organic porous particulate material on the negative electrode plate becomes denser. This can increase the bonding force between the negative electrode plate and the organic porous particulate material, but is likely to cause a too small gap on the surface of the electrode plate. Consequently, heat dissipation is difficult, and safety hazards are brought. In addition, due to the decrease of the particle size, the gap at the corner decreases accordingly, and cannot reserve enough space for the expansion of the electrode plate during cycles, thereby affecting enhancement of the cycle performance of the battery. Therefore, an appropriate particle size of the organic porous particulate material can enhance overall performance of the lithium-ion battery. Further, a pore size of the organic porous particulate material is 1 nm to 200 nm, and optionally, 5 nm to 50 nm.

The increased pore size of the organic porous particulate material improves effects of ventilation and heat dissipation between the electrode plates, decreases the heat emission temperature of the lithium-supplementing electrode plate, increases the electrolyte absorption capacity of the material, increases the compressibility of particles, and increases the available gap at the corner. When the pore size of the material is too large, the electrolyte absorption capacity is increased, but excessive absorption of the electrolytic solution is likely to decrease the bonding force between the lithium-supplementing layer of the electrode plate and the material, and affect enhancement of electrical performance. The decreased pore size of the organic porous particulate material increases an electrolyte storage capacity of the organic porous particulate material, but deteriorates a transmission effect of lithium ions, increases the internal resistance of the battery cell, and adversely affects enhancement of the battery performance. Therefore, the pore size needs to be controlled to be within an appropriate range to enhance the overall performance of lithium-ion battery more effectively. Further, the organic porous particulate material is a hollow structure and/or a through-hole structure.

The structure of the organic porous particulate material affects the electrochemical performance of the battery. If the organic porous particulate material is a solid particle structure, the structure can reserve a specific space for the expansion of the electrode plate and provide a specific electrolyte absorption capacity, but is not desirable in enhancing electrochemical performance. Therefore, the organic porous particulate material is designed to be a hollow structure and/or a through-hole structure, thereby facilitating the electrolytic solution to fully permeate the organic porous particulate material, and enhancing the electrolyte absorption and storage capacities of the material. Therefore, the organic porous particulate material used in this embodiment of this application is optionally a hollow structure and/or a through-hole structure. Further, optionally, the organic porous particulate material of a hollow structure is more capable of absorbing and storing the electrolytic solution than the organic porous particulate material of a through-hole structure. That is because the distinct hollow structure provides a larger electrolyte storage space inside the particulate material, and is more capable of storing the electrolytic solution and more compressible, and more conducive to enhancement of the battery performance.

Further, the crystallinity of the organic porous particulate material is 30% to 80%, and optionally, 30% to 50%.

Crystallinity means a percentage of crystalline regions in a polymer. Crystallization is an ordered arrangement of molecular chains. Generally, the higher the crystallinity, the more regularly the molecular chains are arranged. As the crystallinity of the material increases, the material is less compressible and less capable of absorbing the electrolytic solution. When the crystallinity is too high, the compressibility of the material is relatively low. The low compressibility enhances the performance of the lithium-ion battery, but to an insignificant extent. The low compressibility is likely to make it difficult to reshape a major surface of the rolled battery cell, and increase the internal resistance of the battery cell. Consequently, enough space is not able to be reserved for the expansion of the electrode plate, the material is less capable of absorbing the electrolytic solution, and the effect of improving the infiltration of the electrolytic solution for the electrode plate is insufficient.

Further, a crosslinkability of the organic porous particulate material is 20% to 80%, and optionally, 20% to 70%.

The crosslinkability means a degree of crosslinking between polymer chains in a polymer. As the crosslinkability of the organic porous particulate material increases, the material is less compressible and less capable of storing the electrolytic solution. When the crosslinkability is too high, the compressibility of the material is relatively low, it is difficult to reshape the major surface of the rolled battery cell, and the internal resistance of the battery cell increases. Consequently, enough space is not able to be reserved for the expansion of the electrode plate, and the heat emission temperature of the electrode plate is relatively high. In addition, the material is less capable of storing the electrolytic solution, and the effect of improving the infiltration of the electrolytic solution for the electrode plate is weak. When the crosslinkability of the material is too low, the compressibility of the material is increased significantly, and the material is prone to be crushed, consequently impairing the original structure and the electrolyte storage capacity of the material, and affecting enhancement of the battery performance. Further, an inorganic coating is disposed between the separator and the second functional coating, the inorganic coating includes an inorganic particulate material, and the inorganic particulate material is one or more selected from aluminum oxide, silicon monoxide, silicon dioxide, zirconium dioxide, manganese oxide, magnesium oxide, calcium oxide, and calcium carbonate.

The inorganic coating is added to increase heat resistance of the separator, reduce thermal shrinkage of the separator during cycles of the battery, and improve stability of the separator. The inorganic coating is 0.5 $\mu$m to 10 $\mu$m in thickness, and the first functional coating and the second functional coating are each 5 $\mu$m to 70 $\mu$m in thickness.

Further, the first functional coating, the second functional coating, and the inorganic coating each contain a binder. The binder is one or more selected from polyacrylate, polyacrylate copolymer, polyvinylidene difluoride, vinylidene-difluoride-hexafluoropropylene copolymer, styrene butadiene rubber, and sodium hydroxymethyl cellulose. Generally, a weight percent of the binder in the first functional coating, the second functional coating, and the inorganic coating may be 10 wt% to 40 wt%.

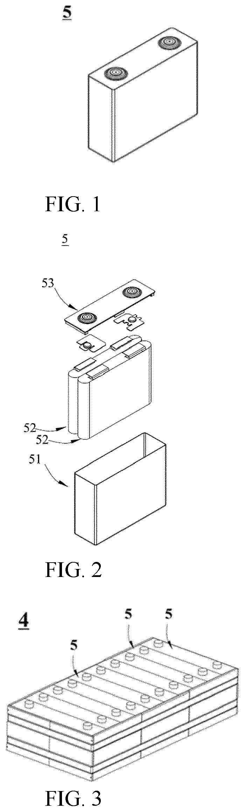

The shape of the lithium-ion battery is not specifically limited in this application, and may be cylindrical, prismatic or any other shape. FIG. 1 shows a prismatic lithium-ion battery 5 as an example.

In some embodiments, the lithium-ion battery may include an outer package configured to package the positive electrode plate, the negative electrode plate, the separator, and the electrolytic solution.

In some embodiments, the outer package of the lithium-ion battery may be a soft package such as a pouch-type soft package. The material of the soft package may be plastic such as one or more of polypropylene (PP), polybutylene terephthalate (PBT), or polybutylene succinate (PBS). The outer package of the lithium-ion battery may also be a hard housing such as a hard plastic housing, an aluminum housing, or a steel housing.

In some embodiments, referring to FIG. 2, the outer package may include a housing body 51 and a cover plate 53. The housing body 51 may include a bottom plate and a side plate connected to the bottom plate. The bottom plate and the side plate define an accommodation cavity. The housing body 51 is provided with an opening that communicates with the accommodation cavity. The cover plate 53 can cover the opening to close the accommodation cavity.

The positive electrode plate, the negative electrode plate, and the separator may be wound or stacked to form the battery cell 52. The battery cell 52 is packaged in the accommodation cavity. The electrolytic solution serves to infiltrate in the battery cell 52.

The quantity of battery cells 52 contained in the lithium-ion battery 5 may be one or more, and may be adjusted as required.

In some embodiments, the lithium-ion batteries may be assembled into a battery module. The quantity of the lithium-ion batteries contained in a battery module may be plural, and may be adjusted according to the use and capacity of the battery module.

FIG. 3 shows a battery module 4 as an example. Referring to FIG. 3, in the battery module 4, a plurality of lithium-ion batteries 5 may be arranged sequentially along a length direction of the battery module 4. Nevertheless, the secondary batteries may also be arranged in any other manner. Further, the plurality of lithium-ion batteries 5 may be fixed by a fastener.

Optionally, the battery module 4 may further include an enclosure that provides an accommodation space. The plurality of lithium-ion batteries 5 are accommodated in the accommodation space.

In some embodiments, the battery module may be assembled into a battery pack. The quantity of the battery modules contained in a battery pack may be adjusted according to the application and capacity of the battery pack.

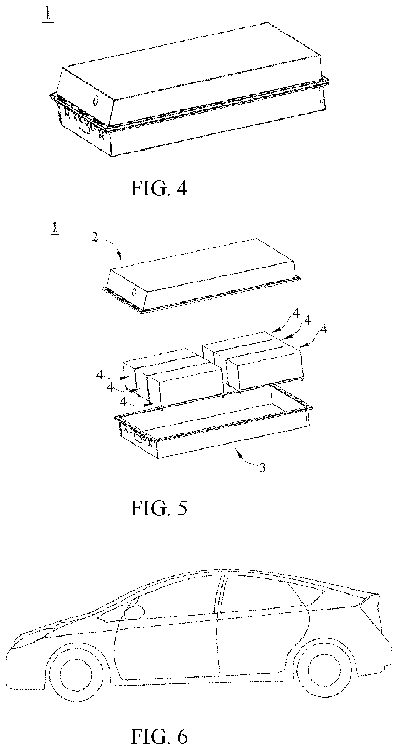

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 can fit the lower box 3 to form a closed space for accommodating the battery module 4. The plurality of battery modules 4 may be arranged in the battery box in any manner.

This application further provides a device. The device includes the lithium-ion battery described herein above. The lithium-ion battery may be used as a power supply to the device, or as an energy storage unit of the device. The device may be, but is not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

A lithium-ion battery, a battery module, or a battery pack may be selected for the device according to working requirements of the device.

FIG. 6 shows a device as an example. The device may be a battery electric vehicle, a hybrid electric vehicle, a plug-in hybrid electric vehicle, or the like. To meet the requirements of the device for a high power and a high energy density of the battery, a battery pack or a battery module may be used for the device.

In another example, the device may be a mobile phone, a tablet computer, a notebook computer, or the like. The device is generally required to be thin and light, and may use a lithium-ion battery as a power supply.

This application is further described below with reference to specific embodiments and comparative embodiments. Understandably, the embodiments are merely intended to illustrate this application but not intended to limit the scope of this application.

A process of preparing a lithium-ion battery according to Embodiments 1~23 is described below.

(1) Preparing a positive electrode plate

A method for preparing the positive electrode plate includes: evenly mixing lithium cobalt oxide as a positive active material, conductive carbon as a conductive agent, and polyvinylidene difluoride (PVDF) as a binder at a weight ratio of 96:2:2, and making the mixture into a positive slurry of a specific viscosity for the lithium-ion battery. coating a positive current collector aluminum foil with the positive slurry, drying at 85 °C, and then cold-calendering the aluminum foil; performing edge trimming, cutting, and slitting, and then drying at 85 °C for 4 hours under a vacuum condition, and welding tabs to make a positive electrode plate.

(2) Preparing a negative electrode plate that contains a first functional coating

A preparation method includes: mixing a negative active material (the negative active material is a mixture of graphite and Si powder, where a weight percent of Si powder is 50 wt%), styrene butadiene rubber as a negative binder, a conductive carbon black Super P as a negative conductive agent at a weight ratio of 92:3:5, and dispersing the mixture in a solvent N-methyl-pyrrolidone (NMP) to make a negative slurry; evenly coating both the front and the back of a negative current collector copper foil with the negative slurry at a coating amount of 130 mg/1540 mm$^2$, and drying in an 85 °C oven to make a substrate of a negative electrode plate; and calendering a metal lithium strip to form a lithium foil of 1~20 $\mu$m in thickness, pressing the lithium foil onto the surface of the substrate of the negative electrode plate, and then performing slitting to obtain a negative electrode plate pre-supplemented with lithium.

The preparation method further includes: evenly mixing an organic porous particulate material (for specific parameters, see Table 1), a binder (a weight ratio of the organic porous particulate material to the binder is 80:20), and cyclohexane to make a first functional coating slurry, evenly coating a surface of a lithium-supplementing layer of the negative electrode plate with the first functional coating, and drying in an 85 °C oven to obtain the negative electrode plate of the lithium-ion battery according to Embodiments 1~23, where the negative electrode plate contains the first functional coating.

(3) Preparing a separator that contains a second functional coating

A preparation method includes: using a polyethylene microporous thin film of 16 $\mu$m in thickness as a substrate of the separator, and evenly mixing porous aluminum oxide, styrene-butadiene rubber as a binder (a weight ratio of the porous aluminum oxide to the binder is 80:20), and deionized water to make an inorganic coating slurry; evenly coating a surface of the substrate of the separator with the inorganic coating slurry, where a coating thickness is controlled to be 4±1 μm; and drying in a 60 °C oven to make a separator containing the inorganic coating.

The preparation method further includes: evenly mixing an organic porous particulate material (for specific parameters, see Table 1), styrene butadiene rubber (a weight ratio of the organic porous particulate material to the styrene butadiene rubber is 80:20), and deionized water to make an organic coating slurry, and then evenly coating the surface of the inorganic coating of the separator with the organic coating slurry; and drying in an 85 °C oven to obtain the separator of the lithium-ion battery according to Embodiments 1~23, where the separator contains the second functional coating.

(4) Preparing an electrolytic solution

A preparation method includes: dissolving lithium hexafluorophosphate in a mixed solvent of ethylene carbonate, dimethyl carbonate, and ethyl methyl carbonate to obtain the electrolytic solution, where a volume ratio of ethylene carbonate to dimethyl carbonate to ethyl methyl carbonate is 1:2:1.

(5) Preparing a lithium-ion battery

A preparation method includes: winding and assembling the positive electrode plate, the negative electrode plate containing the first functional coating, and the separator located between the positive electrode plate and the negative electrode plate, where, after the assembling, a lithium-supplementing layer and a first functional coating are sequentially disposed on a surface of the negative electrode plate toward the separator, and a second functional coating is disposed on a surface of the separator toward the negative electrode plate; and then injecting the electrolytic solution to make the lithium-ion battery according to Embodiments 1~23.

The preparation method further includes: preparing the lithium-ion batteries according to Embodiments 1~23 of this application based on the foregoing method, where specific parameters of the organic porous particulate material used in each embodiment are shown in Table 1. With reference to the method for preparing the lithium-ion battery according to Comparative Embodiment 1, Comparative Embodiment 1 differs from Embodiments 1~23 in that, in the lithium-ion battery according to Comparative Embodiment 1, the negative electrode contains no first functional coating, and the separator contains no second functional coating. Comparative Embodiment 2 differs from Embodiment 1 in that the negative electrode in Comparative Embodiment 2 contains no first functional coating.

Parameter definitions of the organic porous particulate materials and a performance detection method of the lithium-ion batteries in Embodiments 1~23 and Comparative Embodiment 1 are as follows:

(1) Significant surface functional group of the organic porous particulate material (the functional group of which the content is the highest on a surface of an organic porous particle):
Functional groups in an organic material are determined by means of infrared spectroscopy. Each different wavelength corresponds to a different functional group. An intensity of an absorption peak of a specific wavelength serves to qualitatively determine the content of the functional group. A functional group corresponding to the strongest absorption peak is the significant functional group on the surface of the material.
(2) Median diameter of the organic porous particulate material:
A particle size D50 of the organic porous particulate material is determined by using a laser particle size analyzer. D50 represents a median diameter of the organic material.
(3) Average pore size of nanopores on the surface of the organic porous particulate material:
Sizes of 32 micropores on the surface of the porous material are measured by using a scanning electron microscope (SEM). An average value of the sizes represents the average pore size of the porous material.
(4) Crystallinity of the organic porous particulate material:
The heat of melting of a partially crystalline material, which is denoted by ΔH1, is measured using differential scanning calorimetry (DSC). The heat of melting of the polymer material that is 100% crystalline is known and denoted by ΔH, and therefore, the crystallinity of the material is equal to ΔH1 divided by ΔH.
(5) Crosslinkability of the organic porous particulate material:
Constituents of a thermal decomposition product of a polymer are determined by means of pyrolysis chromatography-mass spectrometry, so that the crosslinkability of the polymer is deduced.
(6) Electrolyte storage capacity F of the organic porous particulate material:

An original weight of the organic porous particulate material is M. A measurement method includes: soaking the organic porous particulate material in the electrolytic solution for 24 hours, taking it out, and absorbing residual electrolytic solution thoroughly on the surface by using dust-free paper, and then weighing the weight M1 of the organic porous particulate material after infiltration in the electrolytic solution. The electrolyte storage capacity of the organic porous particulate material is F = (M1- M)/M.

The electrolyte storage capacity F of the organic porous particulate materials in Embodiments 1~23 is shown in Table 1, where F ranges from 10% to 200%, and optionally, 30% to 100%.

(7) Compressibility S of the organic porous particulate material:

Assuming that H represents an original particle height of the organic porous particulate material, and h represents a particle height of the organic porous particulate material that has been pressed for 1 minute under a pressure of 2 Mpa, the compressibility S of the organic porous particulate material is S = (H - h)/H.

The compressibility S of the organic porous particulate materials in Embodiments 1~23 is shown in Table 1, where S ranges from 40% to 90%, and optionally, 50% to 80%.

(8) Measuring a heat emission temperature of a lithium-supplementing electrode plate:

The measurement method includes: rewinding the lithium-supplementing electrode plate for 1,000 m by using a 6-inch reel, and inserting a temperature sensing wire at 500 m of rewinding to measure the temperature of the electrode plate by using a thermometer SKF TKDT 10, where the temperature specification is less than or equal to 60 °C.

The heat emission temperature of the electrode plate in Embodiments 1~23 is shown in Table 1. According to Embodiments 1~23, the heat emission temperature of the electrode plate can be controlled to be less than 60 °C.

(9) Measuring an available gap at a corner:

$$\text{Available gap at a corner} = \text{thickness of an organic particle coating} \times \text{compressibility S.}$$

The available gap at a corner of a battery cell in Embodiments 1~23 is shown in Table 1. The available gap ranges from 1 $\mu$m to 100 $\mu$m, and optionally, 5 $\mu$m to 80 $\mu$m.

(10) Measuring an internal resistance of a battery cell:

Internal resistance is alternating current resistance. A device for measuring the alternating current resistance is IT5100 series battery resistance tester manufactured by Itech. The measurement method includes: applying a fixed frequency of 1 KHz and a fixed current of 50 mA to the battery cell under test, sampling the voltage, and calculating a resistance value by using a rectifier.

The internal resistance of the battery cell in Embodiments 1~23 is shown in Table 1. Generally, the internal resistance of the battery cell is optionally controlled to be less than 0.625 mOhm.

(11) Testing cycle performance of a battery:

A test method includes: charging and discharging the battery repeatedly by using a Neware mobile power product-specific tester until a capacity attenuation rate reaches 80%; for example, if the capacity of the battery cell is 70 Ah, charging and discharging the battery cell repeatedly, and, when the capacity of the battery cell attenuates to 56 Ah, stopping the test and recording the quantity of charge and discharge cycles, which is the cycle performance data of the battery cell.

The internal resistance of the battery cell in Embodiments 1~23 is shown in Table 1. Generally, the cycle performance of the battery cell is optionally controlled to be more than 750 cycles.

Table 1 shows specific parameters and test results of Embodiments 1~23 and Comparative Embodiments 1 and 2:

**Table 1 Specific parameters and test results of Embodiments 1~23 and Comparative Embodiments 1 and 2**

| | Type of organic porous particulate material | Structure of organic porous particulate material | Significant surface functional group | Particle size D50 | Average pore size | Crystallinity | Crosslink ability | Heat emission temperature of lithium-supplementing electrode plate (°C) | Electrolyte storage capacity F | Compressibility S | Available gap at corner (μm) | Internal resistance of battery cell (mOhm) | Cycle performance (cycles) |
|---|---|---|---|---|---|---|---|---|---|---|---|---|---|
| Embodiment 1 | Polyacrylic ester | Hollow sphere | Ester | 5 | 10 | 30% | 30% | 48 | 94% | 72% | 20 | 0.59 | 870 |
| Embodiment 2 | Polyacrylic ester | Hollow sphere | Ester | 5 | 10 | 40% | 30% | 52 | 85% | 60% | 15 | 0.61 | 810 |
| Embodiment 3 | Polyacrylic ester | Hollow sphere | Ester | 5 | 10 | 50% | 30% | 55 | 70% | 50% | 10 | 0.62 | 760 |
| Embodiment 4 | Polyacrylic ester | Hollow sphere | Ester | 5 | 10 | 80% | 30% | 58 | 50% | 42% | 2 | 0.67 | 745 |
| Embodiment 5 | Polyacrylic ester | Hollow sphere | Ester | 5 | 10 | 30% | 20% | 45 | 98% | 80% | 20 | 0.59 | 890 |
| Embodiment 6 | Polyacrylic ester | Hollow sphere | Ester | 5 | 10 | 30% | 40% | 51 | 81% | 70% | 15 | 0.6 | 825 |
| Embodiment 7 | Polyacrylic ester | Hollow sphere | Ester | 5 | 10 | 30% | 50% | 57 | 68% | 62% | 10 | 0.62 | 770 |
| Embodiment 8 | Polyacrylic ester | Hollow sphere | Ester | 5 | 10 | 30% | 70% | 59 | 40% | 51% | 6 | 0.62 | 750 |
| Embodiment 9 | Polyacrylic ester | Hollow sphere | Ester | 5 | 10 | 30% | 80% | 60 | 30% | 40% | 3 | 0.65 | 730 |
| Embodiment 10 | Polyacrylic ester | Hollow sphere | Carboxyl | 5 | 10 | 30% | 30% | 58 | 70% | 55% | 20 | 0.61 | 780 |
| Embodiment 11 | Polyacrylic ester | Hollow sphere | Hydroxyl | 5 | 10 | 30% | 30% | 52 | 65% | 52% | 20 | 0.6 | 810 |
| Embodiment 12 | Polyacrylic ester | Hollow sphere | Ester | 1 | 10 | 30% | 30% | 60 | 70% | 71% | 3 | 0.59 | 740 |
| Embodiment 13 | Polyacrylic ester | Hollow sphere | Ester | 20 | 10 | 30% | 30% | 45 | 95% | 78% | 45 | 0.6 | 900 |

| | Type of organic porous particulate material | Structure of organic porous particulate material | Significant surface functional group | Particle size D50 | Average pore size | Crystallinity | Crosslink ability | Heat emission temperature of lithium-supplementing electrode plate (°C) | Electrolyte storage capacity F | Compressibility S | Available gap at corner (μm) | Internal resistance of battery cell (mOhm) | Cycle performance (cycles) |
|---|---|---|---|---|---|---|---|---|---|---|---|---|---|
| Embodiment 14 | Polyacrylic ester | Hollow sphere | Ester | 50 | 10 | 30% | 30% | 40 | 100% | 75% | 80 | 0.625 | 800 |
| Embodiment 15 | Polyacrylic ester | Hollow sphere | Ester | 70 | 10 | 30% | 30% | 38 | 110% | 74% | 100 | 0.66 | 715 |
| Embodiment 16 | Polyacrylic ester | Hollow sphere | Ester | 5 | 5 | 30% | 30% | 52 | 80% | 72% | 20 | 0.62 | 760 |
| Embodiment 17 | Polyacrylic ester | Hollow sphere | Ester | 5 | 20 | 30% | 30% | 45 | 95% | 73% | 20 | 0.62 | 800 |
| Embodiment 18 | Polyacrylic ester | Hollow sphere | Ester | 5 | 50 | 30% | 30% | 42 | 100% | 73% | 22 | 0.6 | 850 |
| Embodiment 19 | Polyacrylic ester | Hollow sphere | Ester | 5 | 200 | 30% | 30% | 40 | 110% | 80% | 25 | 0.59 | 740 |
| Embodiment 20 | Polyacrylic ester | Through-hole sphere | Ester | 5 | 10 | 30% | 30% | 50 | 87% | 65% | 17 | 0.6 | 800 |
| Embodiment 21 | Polyacrylic ester | Solid sphere | Ester | 5 | / | 30% | 30% | 58 | 25% | 45% | 5 | 0.69 | 740 |
| Embodiment 22 | Polypropylene | Hollow sphere | Ester | 5 | 10 | 30% | 30% | 45 | 80% | 45% | 10 | 0.6 | 805 |
| Embodiment 23 | Polyethylene | Hollow sphere | Ester | 5 | 10 | 30% | 30% | 48 | 85% | 40% | 10 | 0.61 | 800 |
| Comparative Embodiment 1 | / | / | / | / | / | / | / | 65 | 0% | 0% | 0 | 0.59 | 670 |

| | Type of organic porous particulate material | Structure of organic porous particulate material | Significant surface functional group | Particle size D50 | Average pore size | Crystallinity | Crosslink ability | Heat emission temperature of lithium-supplementing electrode plate (°C) | Electrolyte storage capacity F | Compressibility S | Available gap at corner ($\mu$m) | Internal resistance of battery cell (mOhm) | Cycle performance (cycles) |
|---|---|---|---|---|---|---|---|---|---|---|---|---|---|
| Comparative Embodiment 2 | Polyacrylic ester | Hollow sphere | Ester | 5 | 10 | 30% | 30% | 60 | 94% | 72% | 8 | 0.59 | 700 |
| Note: In Comparative Embodiment 2, the second functional coating is merely disposed on a surface of the separator, the surface being close to the negative electrode plate. Material parameters of the coating are shown in Table 1. | | | | | | | | | | | | | |

As can be learned from the data in Table 1, the performance data in Embodiments 1~23 outperform Comparative Embodiments 1 and 2, indicating that the added first functional coating and second functional coating have achieved effects of enhancing stability and safety of the battery and improving the cycle performance of the battery. The following discusses how the different parameters of the first functional coating and the second functional coating affect the battery performance differently.

(i) Embodiments 1~4 show how the changed crystallinity of the organic porous particulate material affects the performance In Embodiments 1~4, the organic materials are identical in porous particles, significant functional groups, median diameter, average pore size, and crosslinkability, but differ merely in crystallinity.

An increased crystallinity of the organic porous particulate material exerts the following effects on the performance: (1) the electrolyte storage capacity of the material is reduced: as the crystallinity increases, the material is more capable of precluding permeation of the electrolytic solution, and is more resistant to solvents, consequently weakening the infiltration of the electrolytic solution. When the crystallinity reaches 80% (Embodiment 4), the electrolyte storage capacity of the material is merely 50%. (2) Reducing compressibility of the material: The crystallinity is increased in parallel with the decrease of the compressibility of the material. When the crystallinity reaches 80% (Embodiment 4), the organic porous particulate material exhibits very high mechanical performance, excessive resistance to compression, and a compressibility of less than 50%. Consequently, it is difficult to reshape the major surface of the rolled battery cell. To be specific, the gap between the electrode plates at the major surface of the rolled battery cell is increased. Consequently, during cycles, a transmission distance of lithium ions is lengthened, and the internal resistance of the battery cell is increased (the internal resistance of the battery cell in Embodiment 4 is higher than that in Embodiments 1~3, and reaches 0.67), ultimately affecting the cycle performance of the battery (the cycle performance of the lithium-ion battery in Embodiment 4 is lower than that in Embodiments 1~3, and is merely 745 cycles, slightly higher than that in Comparative Example 1). (3) Affecting the gap at the corner of the battery cell: As mentioned above, the increased crystallinity reduces the compressibility of the material. When the compressibility is too low, enough space is not able to be reserved for the expansion of the electrode plate (in Embodiment 4, the available gap at the corner is merely 2 $\mu$m), adversely affecting the enhancement of performance of the lithium-ion battery. (4) Affecting the heating of the electrode plate: As mentioned above, the increased crystallinity reduces the compressibility of the material, and decreases a contact area between the surface of the lithium-supplementing electrode plate and the organic porous particulate material. The surface functional group of the particulate material reacts with the lithium-supplementing layer on the surface of the electrode plate to form a passivation layer on the surface of the lithium-supplementing layer, thereby affecting the heating effect of the lithium-supplementing layer. Therefore, when the contact area between the surface of the lithium-supplementing electrode plate and the organic porous particulate material is too small, the heat emission temperature of the lithium-supplementing electrode plate is relatively high (the heat emission temperature of the electrode plate in Embodiment 4 reaches 58 °C).

Therefore, in the embodiments of this application, to achieve more excellent electrochemical performance of the lithium-ion battery, the crystallinity of the organic porous particulate material is within a range of 30% to 80%, and optionally, 30% to 50%.

(ii) Embodiments 1 and 5~9 show how the changed crosslinkability of the organic porous particulate material affects the performance In Embodiments 1 and 5~9, the organic materials are identical in porous particles, significant functional groups, particle size, pore size, and crystallinity, but differ merely in crosslinkability.

The increased crosslinkability of the organic porous particulate material brings the following effects: The increased crosslinkability of the organic porous particulate material makes the material less capable of storing the electrolytic solution and less compressible. When the crosslinkability of the organic porous particulate material is too high (as in Embodiment 9), the following problems will occur: (1) The electrolyte storage capacity of the material is affected: The too high crosslinkability disrupts the original molecular structure and makes the material less capable of absorbing the electrolytic solution. (2) The compressibility of the material is affected: When the crosslinkability is too high, a meshed structure formed between molecules of the porous material is firmer, and has higher molecular mechanical performance and higher resistance to compression. Consequently, the major surface of the rolled battery cell is difficult to reshape. To be specific, the gap between the electrode plates at the major surface of the rolled battery cell is very large. During cycles, the transmission distance of lithium ions is lengthened, thereby increasing the internal resistance of the battery cell, and ultimately affecting the cycle performance of the battery cell. (3) The gap at the corner is affected: The too high crosslinkability reduces the compressibility of the material. During the expansion of the electrode plate, enough space is not able to be reserved for the expansion of the electrode plate, ultimately affecting the performance of the lithium-ion battery. (4) The heat emission of the electrode plate is affected: As mentioned above, the too high crosslinkability reduces the compressibility of the material. The reduced compressibility can provide a larger gap between the lithium-supplementing electrode plates, enhance effects of ventilation and heat dissipation between the lithium-supplementing electrode plates, and ultimately reduce the heat emission temperature of the lithium-supplementing electrode plates.

However, the reduced compressibility also reduces the contact area between the surface of the lithium-supplementing electrode plate and the particulate material. The ester reacts with the lithium-supplementing layer on the surface of the electrode plate to form on a passivation layer on the surface of the lithium-supplementing layer, thereby affecting the heat emission effect of the lithium-supplementing layer. If the contact area is too small, the heat emission temperature of the lithium-supplementing electrode plate is relatively high.

Conversely, the decreased crosslinkability of the organic porous particulate material makes the material more capable of storing the electrolytic solution and more compressible. When the crosslinkability is 20% (as in Embodiment 5), the available gap at the corner reaches 20 $\mu$m, and the heat emission temperature of the electrode plate, the internal resistance of the battery cell, and the cycle performance are excellent. However, if the crosslinkability is reduced to less than 20%, the hardness of the organic porous particulate material will decrease due to the reduced crosslinkability between organics. Consequently, in a case that the organic porous particulate material is crushed, on the one hand, the original structure of the material is disrupted, transmission performance of lithium ions is affected, the internal resistance of the battery cell is increased, and ultimately the battery performance is affected; on the other hand, the original electrolyte storage capacity will be greatly reduced, and ultimately the battery performance is affected.

Therefore, in the embodiments of this application, the crosslinkability of the organic porous particulate material is 20% to 80%, and optionally, 20% to 70%.

(iii) Embodiments 1 and 10-11 show how the changed surface functional group of the organic porous particulate material affects the performance In Embodiments 1 and 10~11, the organic materials are identical in porous particles, particle size, pore size, crystallinity, and crosslinkability, but differ merely in significant functional group. A different surface functional group decides a different reactivity between the organic porous particulate material and the lithium-supplementing layer of the electrode plate. Functional groups of relatively high reactivity with the lithium-supplementing layer are carboxyl, hydroxyl, and ester consecutively. However, although the carboxyl can form a passivation layer on the surface of the lithium layer most quickly, the carboxyl reacts too violently with the lithium layer. Consequently, the heat emission temperature during lithium-supplementing is relatively high (as in Embodiment 10). Secondly, the differences of the surface functional group also affects the electrolyte absorption capacity of the material. Due to the rule of the likes dissolve each other, there are many ester polymer materials in the electrolytic solution. Therefore, the ester functional groups on the surface of the material considerably increase the electrolyte absorption capacity of the material, and enhance the battery performance (Embodiment 1) more effectively.

(iv) Embodiments 1 and 12~15 show how the changed particle size of the organic porous particulate material affects the performance In Embodiments 1 and 12~15, the organic materials are identical in porous particles, surface functional groups, pore size, crystallinity, and crosslinkability, but differ merely in particle size.

The increased particle size of the organic porous particulate material brings the following effects: (1) The electrolyte storage capacity is increased: With a larger particle size, a larger space is available for absorbing more electrolytic solution (the electrolyte storage capacity of the material in Embodiment 15 reaches 110%). (2) The available gap at the corner is affected: The increased particle size increases the available gap at the corner of the battery cell (the gap at the corner in Embodiment 15 reaches 100 $\mu$m). However, a too large gap at the corner leads to a too long transmission distance of lithium ions at the corner. Consequently, lithium plating black flecks appear on the interface, thereby increasing the internal resistance of the battery cell (the internal resistance of the battery cell in Embodiment 15 is relatively high), and affecting the battery performance. (3) The too large particle size leads to absorption of too much electrolytic solution injected, reduces the binding force between the electrode plate and the organic particles, affects the interface effect of the battery cell, and ultimately affects the cycle performance of the battery (the cycle performance in Embodiment 15 is lower than that in Embodiments 13 and 14).

Conversely, the reduced particle size of the organic porous particulate material brings the following effects: (1) The heat emission temperature of the electrode plate is increased: When the particle size of the organic porous particulate material is reduced, the material is more likely to react with the lithium-supplementing electrode plate to form a passivation layer on the surface of the lithium-supplementing layer of the lithium-supplementing electrode plate. If the particle size is too small, a heat conduction path between the lithium-supplementing layer and the electrode plate will be reduced, thereby leading to an increase of the temperature of the electrode plate and possibly bringing safety hazards (for example, the heat emission temperature of the electrode plate in Embodiment 12 reaches 60 °C). (2) The gap at the corner is reduced: The reduced particle size of the organic porous particulate material also directly leads to reduction of the gap at the corner of the battery cell (for example, the gap at the corner in Embodiment 12 is merely 3 $\mu$m). When the gap at the corner is too small, enough space is not able to be reserved for the expansion of the electrode plate during cycles, thereby affecting the enhancement of electrical performance and cycle performance. Therefore, in the embodiments of this application, the particle size of the organic porous particulate material is 1 $\mu$m to 70 $\mu$m, and optionally, 5 $\mu$m to 50 $\mu$m.

(v) Embodiments 1 and 16-19 show how the changed pore size of the organic porous particulate material affects the performance In Embodiments 1 and 16~19, the organic materials are identical in porous particles, surface functional groups, particle size, crystallinity, and crosslinkability, but differ merely in pore size.

The increased pore size of the organic porous particulate material brings the following effects: (1) The heat emission temperature of the lithium-supplementing electrode plate is reduced: The increased pore size of the material can increase effects ventilation and heat dissipation between electrode plates and reduce the heat emission temperature of the lithium-supplementing electrode plate, thereby improving manufacturing safety of the lithium-supplementing electrode plate (for example, the heat emission temperature of the electrode plate in Embodiment 19 is merely 40 °C). (2) The electrolyte storage capacity is affected: The material with a larger pore size can absorb and store the electrolytic solution more easily. However, when the pore size is too large, too much electrolytic solution is absorbed, thereby reducing the bonding force between the lithium-supplementing electrode plate and the organic material particles, disrupting a surface structure of the lithium-supplementing electrode plate, deteriorating the interface, and affecting the enhancement of electrical performance (for example, the cycle performance in Embodiment 19 is inferior to that in Embodiments 17 and 18). (3) The compressibility of particles is increased: The increased pore size of the organic porous particulate material directly increases the compressibility of the particles. However, when the compressibility is too high, the particles are vulnerable to crushing, and microporous structures on the surface of the particulate material are prone to be disrupted, thereby affecting transmission effects of lithium ions and ultimately affecting electrical performance.

Conversely, the reduced pore size of the organic porous particulate material reduces the electrolyte absorption and storage capacities of the material. When the pore size of micropores on the surface is too small, transmission of lithium ions is not smooth, and the internal resistance of the battery cell is likely to increase, ultimately affecting the enhancement of electrical performance of the lithium-ion battery (for example, the performance in Embodiment 16 is inferior to that in Embodiments 17 and 18). Therefore, in the embodiments of this application, the pore size of the organic porous particulate material is 1 nm to 200 nm, and optionally, 5 nm to 50 nm.

(vi) Embodiments 1 and 20-21 show how the changed internal structure of the organic porous particulate material affects the performance In Embodiments 1 and 20~21, the organic materials are identical in surface functional groups, particle size, pore size, crystallinity, and crosslinkability, but differ merely in internal structure of porous particles

If the organic porous particulate material is a solid particulate structure (Embodiment 21), the electrolyte absorption and storage capacities of the material will be severely affected, and the solid particulate structure is less compressible, thereby increasing the internal resistance of the battery cell and ultimately affecting the battery performance. If the organic porous particulate material is a through-hole structure (Embodiment 20), the material can well store the electrolytic solution, and is somewhat compressible, thereby providing a reserved space for the expansion of the electrode plate and an available gap at the corner. If the organic porous particulate material is a hollow structure (Embodiment 1), the material is more capable of storing the electrolytic solution and more compressible, and is more conducive to performance enhancement of the electrode plate and the battery.

(vii) Embodiments 1 and 22-23 show how the changed constituents of the organic material affects the performance In Embodiments 1 and 22~23, the organic materials are identical in internal structure, surface functional groups, particle size, pore size, crystallinity, and crosslinkability, but differ merely in constituents.

Hydrocarbon and olefin materials (as in Embodiments 22 and 23) are less compressible because their molecular structures are mostly long chains, and therefore, increase available gaps at corners of the battery cell to a smaller extent than ester, carboxyl, and hydroxyl materials. The esters and the organic porous particulate materials containing carboxyl or hydroxyl (as in Embodiment 1) not only increases the gap at the corner of the battery cell significantly, but also dissolves the electrolytic solution more effectively. Such materials can absorb and store a larger amount of the electrolytic solution, improve the infiltration effect of the lithium-supplementing layer of the electrode plate more effectively, and suppress the problem of insufficient electrolytic solution at the interface between the electrode plate and the separator in later cycles of the battery.

A person skilled in the art may make changes and modifications to the embodiments of this application based on the disclosure and teachings in this specification. Therefore, this application is not limited to the specific embodiments disclosed and described above, and the modifications and changes made to this application fall within the protection scope of the claims of this application. In addition, although specific terms are used in this specification, the terms are intended merely for ease of description but do not constitute any limitation on this application.

**Claims**

1. A lithium-ion battery (5), comprising a positive electrode plate, a negative electrode plate, a separator located between the positive electrode plate and the negative electrode plate, and an electrolytic solution, wherein

   a lithium-supplementing layer with a smooth surface and a first functional coating are sequentially disposed on a surface of the negative electrode plate, the surface being close to the separator;
   a second functional coating is disposed on a surface of the separator, the surface being close to the negative electrode plate,
   wherein an inorganic coating is disposed between the separator and the second functional coating, the inorganic coating comprises an inorganic particulate material, and the inorganic particulate material is one or more selected from aluminum oxide, silicon monoxide, silicon dioxide, zirconium dioxide, manganese oxide, magnesium oxide, calcium oxide, and calcium carbonate;

wherein both the first functional coating and the second functional coating contain an organic porous particulate material, and a compressibility S of the organic porous particulate material ranges from 40% to 90%;

wherein, S = (H - h)/H, and

H represents an original particle height of the organic porous particulate material, and h represents a particle height of the organic porous particulate material that has been pressed for 1 minute under a pressure of 2 Mpa;

wherein the inorganic coating is 0.5 $\mu$m to 10 $\mu$m in thickness, and the first functional coating and the second functional coating are each 5 $\mu$m to 70 $\mu$m in thickness; and

wherein the organic porous particulate material is one or more selected from polyacrylate, polypropylene, polyethylene, polyamide, polyborate, polysulfone, polyarylate, polyvinylpyridine, and polyaniline.

2. The lithium-ion battery (5) according to claim 1, wherein the compressibility S of the organic porous particulate material ranges from 50% to 80%.

3. The lithium-ion battery (5) according to any one of claims 1 to 2, wherein a particle size of the organic porous particulate material is 1 $\mu$m to 70 $\mu$m, preferably 5 $\mu$m to 50 $\mu$m, wherein the particle size is measured as described in the description.

4. The lithium-ion battery (5) according to claim 3, wherein a pore size of the organic porous particulate material is 1 nm to 200 nm, preferably 5 nm to 50 nm, wherein the pore size is measured as described in the description.

5. The lithium-ion battery (5) according to any one of claims 1 to 4, wherein the organic porous particulate material is a hollow structure and/or a through-hole structure.

6. The lithium-ion battery (5) according to any one of claims 1 to 5, wherein a crystallinity of the organic porous particulate material is 30% to 80%, preferably 30% to 50%, wherein the crystallinity is measured as described in the description.

7. The lithium-ion battery (5) according to claim 1, wherein an inorganic coating is disposed between the separator and the second functional coating, the inorganic coating comprises an inorganic particulate material, and the inorganic particulate material is one or more selected from aluminum oxide, silicon monoxide, silicon dioxide, zirconium dioxide, manganese oxide, magnesium oxide, calcium oxide, and calcium carbonate.

8. The lithium-ion battery (5) according to claim 7, wherein the first functional coating, the second functional coating, and the inorganic coating each further contain a binder, and the binder is one or more selected from polyacrylate, polyacrylate copolymer, polyvinylidene difluoride, vinylidene-difluoride-hexafluoropropylene copolymer, styrene butadiene rubber, and sodium hydroxymethyl cellulose.

9. A device, wherein a drive source or a storage source of the device is the lithium-ion battery (5) according to any one of claims 1 to 8.

**Patentansprüche**

1. Lithium-Ionen-Batterie (5), umfassend eine positive Elektrodenplatte, eine negative Elektrodenplatte, einen Separator, der zwischen der positiven Elektrodenplatte und der negativen Elektrodenplatte angeordnet ist, und eine Elektrolytlösung, wobei

eine Lithium-Ergänzungsschicht mit einer glatten Oberfläche und eine erste funktionelle Beschichtung nacheinander auf einer Oberfläche der negativen Elektrodenplatte angeordnet sind, wobei sich die Oberfläche in der Nähe des Separators befindet;

eine zweite funktionelle Beschichtung auf einer Oberfläche des Separators angeordnet ist, wobei sich die Oberfläche in der Nähe der negativen Elektrodenplatte befindet,

wobei eine anorganische Beschichtung zwischen dem Separator und der zweiten funktionellen Beschichtung angeordnet ist, die anorganische Beschichtung ein anorganisches teilchenförmiges Material umfasst und das anorganische teilchenförmige Material eines oder mehrere ist, die aus Aluminiumoxid, Siliciummonoxid, Siliciumdioxid, Zirkoniumdioxid, Manganoxid, Magnesiumoxid, Calciumoxid und Calciumcarbonat ausgewählt sind;

wobei sowohl die erste funktionelle Beschichtung als auch die zweite funktionelle Beschichtung ein organisches poröses teilchenförmiges Material enthalten und die Kompressibilität S des organischen porösen teilchenförmigen Materials im Bereich von 40 % bis 90 % liegt;

wobei gilt: S = (H - h)/H, und

H steht für die ursprüngliche Teilchenhöhe des organischen porösen teilchenförmigen Materials, und h steht für die Teilchenhöhe des organischen porösen teilchenförmigen Materials, das 1 Minute lang unter einem Druck von 2 MPa gepresst wurde;

wobei die anorganische Beschichtung 0,5 $\mu$m bis 10 um dick ist und die erste funktionelle Beschichtung und die zweite funktionelle Beschichtung jeweils 5 $\mu$m bis 70 um dick sind; und

wobei das organische poröse teilchenförmige Material eines oder mehrere ist, ausgewählt aus Polyacrylat, Polypropylen, Polyethylen, Polyamid, Polyborat, Polysulfon, Polyarylat, Polyvinylpyridin und Polyanilin.

2. Lithium-Ionen-Batterie (5) nach Anspruch 1, wobei die Kompressibilität S des organischen porösen teilchenförmigen Materials im Bereich von 50 % bis 80 % liegt.

3. Lithium-Ionen-Batterie (5) nach einem der Ansprüche 1 bis 2, wobei die Teilchengröße des organischen porösen teilchenförmigen Materials 1 $\mu$m bis 70 um, vorzugsweise 5 $\mu$m bis 50 $\mu$m beträgt, wobei die Teilchengröße wie in der Beschreibung beschrieben gemessen wird.

4. Lithium-Ionen-Batterie (5) nach Anspruch 3, wobei die Porengröße des organischen porösen teilchenförmigen Materials 1 nm bis 200 nm, vorzugsweise 5 nm bis 50 nm beträgt, wobei die Porengröße wie in der Beschreibung beschrieben gemessen wird.

5. Lithium-Ionen-Batterie (5) nach einem der Ansprüche 1 bis 4, wobei das organische poröse teilchenförmige Material eine Hohlstruktur und/oder eine Durchgangslochstruktur ist.

6. Lithium-Ionen-Batterie (5) nach einem der Ansprüche 1 bis 5, wobei die Kristallinität des organischen porösen teilchenförmigen Materials 30 % bis 80 %, vorzugsweise 30 % bis 50 % beträgt, wobei die Kristallinität wie in der Beschreibung beschrieben gemessen wird.

7. Lithium-Ionen-Batterie (5) nach Anspruch 1, wobei eine anorganische Beschichtung zwischen dem Separator und der zweiten funktionellen Beschichtung angeordnet ist, die anorganische Beschichtung ein anorganisches teilchenförmiges Material umfasst und das anorganische teilchenförmige Material eines oder mehrere ist, die aus Aluminiumoxid, Siliciummonoxid, Siliciumdioxid, Zirkoniumdioxid, Manganoxid, Magnesiumoxid, Calciumoxid und Calciumcarbonat ausgewählt sind.

8. Lithium-Ionen-Batterie (5) nach Anspruch 7, wobei die erste funktionelle Beschichtung, die zweite funktionelle Beschichtung und die anorganische Beschichtung jeweils ein Bindemittel enthalten und das Bindemittel eines oder mehrere ist, ausgewählt aus Polyacrylat, Polyacrylat-Copolymer, Polyvinylidendifluorid, Vinylidendifluorid-Hexafluorpropylen-Copolymer, Styrol-Butadien-Kautschuk und Natriumhydroxymethylcellulose.

9. Vorrichtung, bei der eine Antriebsquelle oder eine Speicherquelle der Vorrichtung die Lithium-Ionen-Batterie (5) nach einem der Ansprüche 1 bis 8 ist.

**Revendications**

1. Batterie lithium-ion (5), comprenant une plaque d'électrode positive, une plaque d'électrode négative, un séparateur situé entre la plaque d'électrode positive et la plaque d'électrode négative, et une solution électrolytique, dans laquelle

une couche de renforcement du lithium avec une surface lisse et un premier revêtement fonctionnel sont disposés séquentiellement sur une surface de la plaque d'électrode négative, la surface étant proche du séparateur ;

un second revêtement fonctionnel est disposé sur une surface du séparateur, la surface étant proche de la plaque de l'électrode négative,

dans laquelle un revêtement inorganique est disposé entre le séparateur et le second revêtement fonctionnel, le revêtement inorganique comprend un matériau particulaire inorganique, et le matériau particulaire inorganique est un ou plusieurs choisis parmi l'oxyde d'aluminium, le monoxyde de silicium, le dioxyde de silicium, le dioxyde de zirconium, l'oxyde de manganèse, l'oxyde de magnésium, l'oxyde de calcium, et le carbonate de calcium ; dans laquelle le premier revêtement fonctionnel et le second revêtement fonctionnel contiennent tous deux un matériau particulaire poreux organique, et où la compressibilité S du matériau particulaire poreux organique est comprise entre 40 % et 90 % ;

où, S = (H - h)/H, et

H représente la hauteur initiale des particules du matériau poreux organique, et h représente la hauteur des particules du matériau poreux organique qui a été pressé pendant 1 minute sous une pression de 2 Mpa ; dans laquelle le revêtement inorganique a une épaisseur comprise entre 0,5 um et 10 um, et le premier revêtement fonctionnel et le second revêtement fonctionnel ont chacun une épaisseur comprise entre 5 um et 70 um ; et

dans laquelle le matériau poreux organique est un ou plusieurs matériaux choisis parmi le polyacrylate, le polypropylène, le polyéthylène, le polyamide, le polyborate, le polysulfone, le polyarylate, la polyvinylpyridine et la polyaniline.

2. Batterie lithium-ion (5) selon la revendication 1, dans laquelle la compressibilité S du matériau particulaire poreux organique est comprise entre 50 % et 80 %.

3. Batterie lithium-ion (5) selon l'une quelconque des revendications 1 à 2, dans laquelle une taille de particule du matériau particulaire poreux organique est comprise entre 1 um et 70 um, de préférence entre 5 $\mu$m et 50 um, la taille de particule étant mesurée comme indiqué dans la description.

4. Batterie lithium-ion (5) selon la revendication 3, dans laquelle la taille des pores du matériau particulaire poreux organique est comprise entre 1 nm et 200 nm, de préférence entre 5 nm et 50 nm, la taille des pores étant mesurée comme indiqué dans la description.

5. Batterie lithium-ion (5) selon l'une quelconque des revendications 1 à 4, dans laquelle le matériau particulaire poreux organique est une structure creuse et/ou une structure à trous traversants.

6. Batterie lithium-ion (5) selon l'une quelconque des revendications 1 à 5, dans laquelle la cristallinité du matériau particulaire poreux organique est comprise entre 30 % et 80 %, de préférence entre 30 % et 50 %, la cristallinité étant mesurée comme indiqué dans la description.

7. Batterie lithium-ion (5) selon la revendication 1, dans laquelle un revêtement inorganique est disposé entre le séparateur et le second revêtement fonctionnel, le revêtement inorganique comprend un matériau particulaire inorganique, et le matériau particulaire inorganique est un ou plusieurs choisis parmi l'oxyde d'aluminium, le monoxyde de silicium, le dioxyde de silicium, le dioxyde de zirconium, l'oxyde de manganèse, l'oxyde de magnésium, l'oxyde de calcium, et le carbonate de calcium.

8. Batterie lithium-ion (5) selon la revendication 7, dans laquelle le premier revêtement fonctionnel, le second revêtement fonctionnel et le revêtement inorganique contiennent chacun un liant, et le liant est un ou plusieurs choisis parmi le polyacrylate, le copolymère de polyacrylate, le poly(difluorure de vinylidène), le copolymère de vinylidène-difluoride-hexafluoropropylène, le caoutchouc styrène-butadiène et l'hydroxyméthylcellulose sodique.

9. Dispositif, dans lequel une source d'entraînement ou une source de stockage du dispositif est la batterie lithium-ion (5) selon l'une quelconque des revendications 1 à 8.

5

FIG. 1

5

53

52
52

51

FIG. 2

4    5    5

5

FIG. 3

1

FIG. 4

1    2

4  4  4
4
4
4
3

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105742613 A
- WO 2019107229 A1